# EUROPEAN PATENT APPLICATION

(11) **EP 4 053 975 A1**
(43) Date of publication of application: **07.09.2022**
(21) Application number: 22153106.4
(22) Date of filing: 25.01.2022
(51) Int. Cl.: H01M 50/109, H01M 50/153, H01M 50/181, H01M 50/188

(54) **RECHARGEABLE BATTERY**

(30) Priority: 19.02.2021 KR 20210022787
(71) Applicant: Samsung SDI Co., Ltd., Yongin-si, Gyeonggi-do 17084 (KR)
(72) Inventor: Chun, Byoungmin, 17084 Yongin-si, Gyeonggi-do (KR); Lee, Jong-Ha, 17084 Yongin-si, Gyeonggi-do (KR)
(74) Representative: Gulde & Partner

(57) **Abstract**

A rechargeable battery (1000) includes: an electrode assembly (100) including a first electrode (110), a second electrode (120), and a separator (130) between the first electrode (110) and the second electrode (120); a case (200) that is connected to the first electrode (110) and accommodates the electrode assembly (100), and includes an opening (210); a cap plate (300) that is coupled to the case (200) to cover an outer area of the opening (210) and includes a through-hole (301) exposing a central area of the opening (210); a terminal plate (400) that is connected to the second electrode (120) and is insulation-bonded to the cap plate (200) so as to cover the through-hole (301); and a thermal fusion layer (500) that is positioned between the cap plate (300) and the terminal plate (400) and insulation-bonds the cap plate (300) and the terminal plate (400), and the cap plate (300) includes a plating layer (320) that is directly bonded to the thermal fusion layer (500).

## Description

### BACKGROUND

### 1. Field

Aspects of embodiments of the present disclosure relate to a rechargeable battery.

### 2. Description of the Related Art

Generally, a rechargeable battery is a battery that may be repeatedly charged and discharged.

Recently, as the demand for wearable devices, such as headphones, earphones, smartwatches, and body-attached medical devices using wireless communication such as Bluetooth is increasing, the need for ultra-small rechargeable batteries to be mounted on the wearable devices is increasing.

Such an ultra-small rechargeable battery includes an electrode assembly including positive and negative electrodes, a case accommodating the electrode assembly and connected to one electrode of the electrode assembly, and a terminal part sealing the electrode assembly together with the case and connected to the other electrode of the electrode assembly.

However, since in the conventional ultra-small rechargeable battery, the terminal part and the case are bonded by using a polymer material for sealing and insulating between the terminal part and the case that are metal, hetero-bonding is performed between the polymer material and the terminal part and between the polymer material and the case, bonding force between the terminal part and the case may be reduced.

The above information disclosed in this Background section is for enhancement of understanding of the background of the invention, and, therefore, it may contain information that does not form the prior art that is already known in this country to a person of ordinary skill in the art.

### SUMMARY

According to an aspect of embodiments of the present invention, a rechargeable battery is provided in which bonding force between a cap plate and a terminal plate is improved even when the cap plate and the terminal plate are bonded by a polymer material.

A rechargeable battery according to an embodiment of the present invention includes: an electrode assembly including a first electrode, a second electrode, and a separator between the first electrode and the second electrode; a case that is connected to the first electrode and accommodates the electrode assembly, and includes an opening; a cap plate that is coupled to the case to cover an outer area of the opening and includes a through-hole exposing a central area of the opening; a terminal plate that is connected to the second electrode and is insulation-bonded to the cap plate so as to cover the through-hole; and a thermal fusion layer that is positioned between the cap plate and the terminal plate and insulation-bonds the cap plate and the terminal plate, and the cap plate includes a plating layer that is directly bonded to the thermal fusion layer.

The thermal fusion layer may include a resin, and the plating layer may include nickel.

The resin may include polypropylene.

The cap plate may further include a plate body including stainless steel, the plating layer being coated on a front surface thereof, and a passive state film coated on a rear surface of the plate body.

The front surface of the plate body may face the thermal fusion layer, and the rear surface of the plate body may face an inside of the case.

The front surface of the plate body may be in direct contact with the plating layer.

The passive state film may not be positioned between the front surface of the plate body and the plating layer.

The passive state film may be in contact with an electrolyte solution inside the case.

The passive state film may include a chromium oxide.

The terminal plate may include a flange portion that covers the through-hole and is directly bonded to the thermal fusion layer; and a protrusion passing through the through-hole from the flange portion.

The flange portion may be positioned on the plating layer of the cap plate, and the protrusion may pass through the through-hole from the flange portion to be connected to the second electrode.

The electrode assembly may further include a first electrode tab extending from the first electrode to be welded to the case, and a second electrode tab extending from the second electrode to be welded to the protrusion of the terminal plate.

The case and the cap plate may have a same polarity as the first electrode, and the terminal plate may have a same polarity as the second electrode.

The rechargeable battery may be a coin cell or a button cell.

A ratio of a height of the rechargeable battery to a diameter thereof may be 1 or less.

According to embodiments, a rechargeable battery is provided in which bonding force between a cap plate and a terminal plate is improved even when the cap plate and the terminal plate are bonded by a polymer material.

All embodiments described in this specification may be advantageously combined with one another to the extent that their respective features are compatible. In particular, the expression "according to an embodiment" means that the respective features may or may not be part of specific embodiments of the present invention.

### BRIEF DESCRIPTION OF THE DRAWINGS

FIG. 1 illustrates a perspective view of a rechargeable battery according to an embodiment.
FIG. 2 illustrates a cross-sectional view taken along the line II-II of FIG. 1.
FIG. 3 illustrates an enlarged view of a region "A" of FIG. 2.

### DESCRIPTION OF REFERENCE SYMBOLS

| | | | |
|---|---|---|---|
| 100: | electrode assembly | 200: | case |
| 300: | cap plate | 320: | plating layer |
| 400: | terminal plate | 500: | thermal fusion layer |

### DETAILED DESCRIPTION

The present invention will be described more fully herein with reference to the accompanying drawings, in which some embodiments of the invention are shown. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

In addition, unless explicitly described to the contrary, it is to be understood that terms such as "comprises," "includes," or "have" used in the present specification specify the presence of stated features, numerals, steps, operations, components, parts, or a combination thereof, but do not preclude the presence or addition of one or more other features, numerals, steps, operations, components, parts, or a combination thereof.

Also, in this specification, it is to be understood that when one component is referred to as being "connected" or "coupled" to another component, it may be connected or coupled directly to the other component or connected or coupled to another component with one or more other components intervening therebetween.

Singular forms are to include plural forms unless the context clearly indicates otherwise.

It is to be understood that, although the terms "first," "second," etc. may be used herein to describe various elements, these elements should not be limited by these terms. These terms are used to distinguish one element from another. For example, a first element could be termed a "second" element, and, similarly, a second element could be termed a "first" element, without departing from the scope of example embodiments of the inventive concept. The terms of a singular form may include plural forms unless the context clearly indicates otherwise.

In addition, terms such as "below," "lower," "above," "upper," and the like are used to describe the relationship of the configurations shown in the drawings. However, the terms are used as a relative concept and are described with reference to the direction indicated in the drawings.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

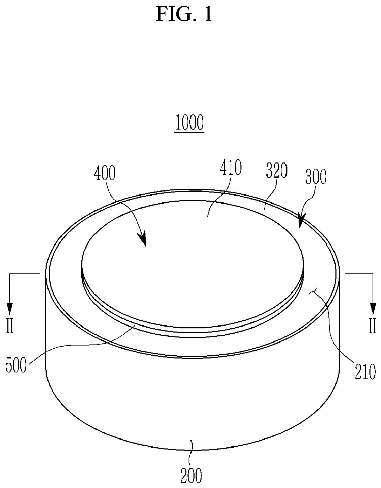

Herein, a rechargeable battery according to an embodiment will be described with reference to FIG. 1 to FIG. 3.

The rechargeable battery according to an embodiment is an ultra-small rechargeable battery, and may include a coin cell or a button cell, but the present invention is not limited thereto, and may include a cylindrical or pin-type cell.

Here, the coin cell or the button cell is a thin coin-type or button-type cell, and may refer to a battery having a ratio (height/diameter) of a height to a diameter of 1 or less, but is not limited thereto. In an embodiment, the coin cell or the button cell is mainly cylindrical, and a horizontal cross-section is circular, but the present invention is not limited thereto, and a horizontal cross-section may be oval or polygonal. In this case, the diameter may mean a maximum distance of the cell based on a horizontal direction of the cell, and the height may mean a maximum distance (distance from a flat bottom surface thereof to a flat uppermost surface) of the cell based on a vertical direction of the cell.

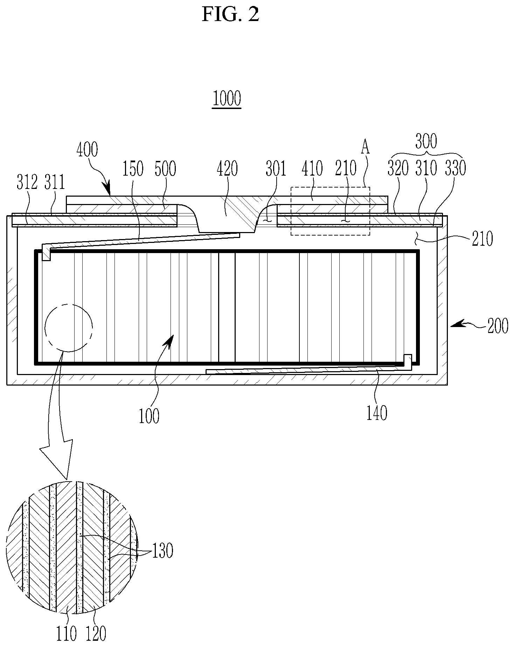

FIG. 1 illustrates a perspective view of a rechargeable battery according to an embodiment; and FIG. 2 illustrates a cross-sectional view taken along the line II-II of FIG. 1.

Referring to FIG. 1 and FIG. 2, a rechargeable battery 1000 according to an embodiment includes an electrode assembly 100, a case 200, a cap plate 300, a terminal plate 400, and a thermal fusion layer 500.

The electrode assembly 100 is accommodated in the case 200. A lower portion of the electrode assembly 100 faces a bottom portion of the case 200, and an upper portion of the electrode assembly 100 faces the cap plate 300 covering an opening 210 of the case 200 and the terminal plate 400. In an embodiment, the upper and lower portions of the electrode assembly 100 may have planar shapes that are parallel to each other, but are not limited thereto.

The electrode assembly 100 includes a first electrode 110, a second electrode 120, a separator 130, a first electrode tab 140, and a second electrode tab 150.

The first electrode 110 and the second electrode 120 are spaced apart from each other, and the separator 130 including an insulating material is disposed between the first electrode 110 and the second electrode 120. In an embodiment, the first electrode 110 may be a negative electrode (anode) and the second electrode 120 may be a positive electrode (cathode), but the present invention is not limited thereto, and the first electrode 110 may be a positive electrode and the second electrode 120 may be a negative electrode.

In an embodiment, the first electrode 110 has a shape of a band extending in a direction, and includes a negative electrode coated region that is a region where an anode active material layer is coated to a current collector of a metal foil (for example, a Cu foil), and a negative electrode uncoated region that is a region where an active material is not coated. The negative electrode uncoated region may be disposed at an end portion in an extending direction of the first electrode 110.

In an embodiment, the second electrode 120 has a band shape that is spaced apart from the first electrode 110 to extend in a direction with the separator 130 interposed therebetween, and includes a positive electrode coated region that is a region where a cathode active material layer is coated to a current collector of a metal foil (for example, an AI foil), and a positive electrode uncoated region that is a region where an active material is not coated. The positive electrode uncoated region may be disposed at an end portion in an extending direction of the second electrode 120.

The separator 130 extends in a direction between the first electrode 110 and the second electrode 120 to prevent or substantially prevent a short circuit between the first electrode 110 and the second electrode 120.

In an embodiment, the first electrode 110, the separator 130, and the second electrode 120 are sequentially stacked and wound in a jelly roll shape, but are not limited thereto, and may be formed in various known shapes. Each of the first electrode 110, the second electrode 120, and the separator 130 may include any of various known materials.

The first electrode tab 140 extends from the first electrode 110 of the electrode assembly 100 to the case 200. In an embodiment, the first electrode tab 140 is coupled to a bottom portion of the case 200 to connect the first electrode 110 and the case 200. The first electrode tab 140 contacts the first electrode 110 and the case 200. In an embodiment, the first electrode tab 140 is welded to the bottom portion of the case 200, but is not limited thereto. Through the first electrode tab 140, the case 200 has a same polarity as that of the first electrode 110.

The second electrode tab 150 extends from the second electrode 120 of the electrode assembly 100 to the terminal plate 400. In an embodiment, the second electrode tab 150 is coupled to a protrusion 420 of the terminal plate 400 to connect the second electrode 120 and the terminal plate 400. The second electrode tab 150 contacts the second electrode 120 and the terminal plate 400. In an embodiment, the second electrode tab 150 is welded to a surface of the protrusion 420 of the terminal plate 400, but is not limited thereto. Through the second electrode tab 150, the terminal plate 400 has a same polarity as that of the second electrode 120.

In an embodiment, a center pin penetrating a center of the electrode assembly 100 in a vertical direction may be positioned at a center portion of the electrode assembly 100, and the center pin may support the first electrode tab 140 and the second electrode tab 150, but embodiments are not limited thereto.

The case 200 is coupled to the first electrode 110 of the electrode assembly 100 to house the electrode assembly 100. The case 200 includes an opening 210 that exposes an upper portion of the electrode assembly 100. In an embodiment, the bottom portion of the case 200 is welded to the first electrode tab 140 and connected to the first electrode 110 of the electrode assembly 100, and the case 200 has the same polarity as the first electrode 110. In an embodiment, the case 200 has a cylindrical-can shape for accommodating the electrode assembly 100 of a jelly roll shape, but is not limited thereto, and may have any of various known shapes. The case 200 may accommodate any of various known electrolyte solutions along with the electrode assembly 100. In an embodiment, an outer surface of the case 200 may be a first electrode terminal of the rechargeable battery 1000, but is not limited thereto. In an embodiment, an upper surface of a flange portion 410 that is an outer surface of the terminal plate 400 may be a second electrode terminal of the rechargeable battery 1000, but is not limited thereto. In an embodiment, a plating layer may be coated on the outer surface of the case 200, but the present invention is not limited thereto, and any of various known coating layers may be coated on the outer surface of the case 200.

In an embodiment, the case 200 includes stainless steel. A passive state film including a chromium oxide (Cr₂O₃), which is an inherent characteristic of stainless steel, is naturally formed on the inner surface and the outer surface of the case 200, and oxidation of the inner surface and the outer surface of the case 200 is suppressed by the passive state film.

The opening 210 of the case 200 is covered by the cap plate 300 and the terminal plate 400.

The cap plate 300 is combined with the case 200 to cover an outer area of the opening 210. The cap plate 300 includes a through-hole 301 that exposes a central area of the opening 210. The cap plate 300 is directly coupled to a side wall of the case 200 in which the opening 210 of the case 200 is formed by a welding process to cover the outer area of the opening 210. In an embodiment, the cap plate 300 has a ring shape by the through-hole 301 formed in a central portion thereof, but is not limited thereto. In an embodiment, the cap plate 300 is combined with the case 200 to have the same polarity as that of the first electrode 110. Accordingly, the cap plate 300 and the case 200 have the same polarity as the first electrode 110. In an embodiment, an outer surface of the cap plate 300 may be a first electrode terminal of the rechargeable battery 1000, but is not limited thereto. The cap plate 300 is insulation-bonded to the terminal plate 400 with the thermal fusion layer 500 interposed therebetween.

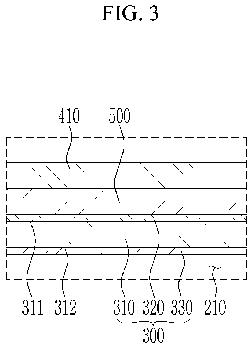

FIG. 3 illustrates an enlarged view of a region "A" of FIG. 2.

Referring to FIG. 3 and FIG. 2, the cap plate 300 further includes a plate body 310, a plating layer 320, and a passive state film 330.

In an embodiment, the plate body 310 includes stainless steel, and includes a front surface 311 coated with the plating layer 320 and a rear surface 312 coated with the passive state film 330. The front surface 311 of the plate body 310 faces the thermal fusion layer 500, and the rear surface 312 of the plate body 310 faces the inside of the case 200. The front surface 311 of the plate body 310 is in direct contact with the plating layer 320, and the passive state film 330 is not positioned between the front surface 311 of the plate body 310 and the plating layer 320.

The plating layer 320 is coated on the front surface 311 of the plate body 310, and is directly bonded to the thermal fusion layer 500. In an embodiment, the plating layer 320 includes nickel, but is not limited thereto, and may include any of various known plating materials, such as copper and silver. In an embodiment, the plating layer 320 may be coated on the front surface 311 of the plate body 310 by removing the passive state film including a chromium oxide (Cr₂O₃) and the like naturally formed on the front surface 311 of the plate body 310 including stainless steel and by using a plating process such as electrolytic plating, but is not limited thereto. The plating layer 320 is in direct contact with the front surface 311 of the plate body 310 and the thermal fusion layer 500 between the front surface 311 of the plate body 310 and the thermal fusion layer 500. In an embodiment, a surface of the plating layer 320 that is directly bonded to the thermal fusion layer 500 may be surface-treated to increase a number of -OH groups serving as bonding active groups, but is not limited thereto. In an embodiment, the passive state film, which is an oxide, is not positioned between the cap plate 300 and the thermal fusion layer 500 by the plating layer 320, and a bonding force between the cap plate 300 and the thermal fusion layer 500 is improved.

The passive state film 330 is coated on the rear surface 312 of the plate body 310. In an embodiment, the passive state film 330 may be naturally formed on the rear surface 312 of the plate body 310 due to an inherent characteristic of stainless steel included in the plate body 310, but is not limited thereto. In an embodiment, the passive state film 330 includes a chromium oxide (Cr₂O₃) and the like, and is in contact with an electrolyte solution inside the case 200. Chemical transformation of the rear surface 312 of the cap plate 300 by the electrolyte solution or the like is suppressed by the passive state film 330 including an oxide. The passive state film 330 may also be formed on an edge of the plate body 310 from the rear surface 312 of the plate body 310.

As described above, in an embodiment, the cap plate 300 includes the plate body 310 including stainless steel, the plating layer 320 including nickel coated on the front surface 311 of the plate body 310, and the passive state film 330 including a chromium oxide coated on the rear surface 312 of the plate body 310, and the passive state film, which is an oxide, is not positioned between the cap plate 300 and the thermal fusion layer 500 by the plating layer 320 including nickel, such that the bonding force between the cap plate 300 and the thermal fusion layer 500 is improved, thereby improving the bonding force between the cap plate 300 and the terminal plate 400, and, at the same time, suppressing the chemical transformation of the rear surface 312 of the cap plate 300 by an electrolyte solution or the like by the passive state film 330 including an oxide.

The terminal plate 400 is connected to the second electrode 120 to be insulation-bonded to the cap plate 300 by the thermal fusion layer 500. The terminal plate 400 covers the through-hole 301 of the cap plate 300. The terminal plate 400 is disposed on the cap plate 300. The terminal plate 400 covers the central area of the opening 210 of the case 200 exposed by the through-hole 301 of the cap plate 300. The terminal plate 400 covers the central area of the opening 210, and the cap plate 300 covers the outer area of the opening 210, and, thus, the opening 210 of the case 200 is completely covered by the terminal plate 400 and the cap plate 300. The terminal plate 400 tightly seals the electrode assembly 100 together with the case 200, the cap plate 300, and the thermal fusion layer 500. The terminal plate 400 is coupled to the second electrode tab 150 of the electrode assembly 100 to be connected to the second electrode 120 of the electrode assembly 100. The terminal plate 400 has the same polarity as that of the second electrode 120.

The terminal plate 400 includes the flange portion 410 and the protrusion 420.

The flange portion 410 is disposed on the plating layer 320 of the cap plate 300, and overlaps the cap plate 300 to cover the through-hole 301. The flange portion 410 has a larger area than the protrusion 420. The flange portion 410 may have a larger diameter than the protrusion 420. In an embodiment, the flange portion 410 has a thinner thickness than the protrusion 420, but is not limited thereto. A rear surface of the flange portion 410 is in contact with the thermal fusion layer 500, and the flange portion 410 is insulation-bonded to the cap plate 300 by the thermal fusion layer 500. A front surface of the flange portion 410 may be the second electrode terminal of the rechargeable battery 1000.

The protrusion 420 protrudes from the flange portion 410 to penetrate the through-hole 301. The protrusion 420 passes through the through-hole 301 from the flange portion 410 to be connected to the second electrode 120. A surface of the protrusion 420 is coupled to the second electrode tab 150. In an embodiment, the surface of the protrusion 420 may be welded to the second electrode tab 150, but is not limited thereto. As the protrusion 420 is coupled with the second electrode tab 150, the protrusion 420 and the flange portion 410 of the terminal plate 400 have the same polarity as that of the second electrode 120. The surface of the protrusion 420 coupled to the second electrode tab 150 may have a smaller diameter than the front surface of the flange portion 410 that may be an electrode terminal. In an embodiment, the protrusion 420 and the flange portion 410 are integrally formed by using forging or the like, but are not limited thereto, and different materials may be coupled to form the terminal plate 400.

In an embodiment, a plating layer may be coated on the outer surface of the terminal plate 400, but the present invention is not limited thereto, and various known coating layers may be coated on the outer surface of the terminal plate 400. In an embodiment, the terminal plate 400 includes aluminum, but is not limited thereto, and may include any of various known metals.

The thermal fusion layer 500 is positioned between the plating layer 320 of the cap plate 300 and the flange portion 410 of the terminal plate 400. The thermal fusion layer 500 insulation-bonds the cap plate 300 and the terminal plate 400. The thermal fusion layer 500 contains an insulating material, and insulates between the cap plate 300 and the terminal plate 400. The thermal fusion layer 500 is thermally fusion-bonded between the cap plate 300 and the flange portion 410 of the terminal plate 400 by heat or a laser beam. In an embodiment, the thermal fusion layer 500 includes a polypropylene resin, but is not limited thereto, and may include any of various known polymer materials for insulation-bonding between the cap plate 300 and the terminal plate 400. Since the cap plate 300 and the terminal plate 400 are bonded by the thermal fusion layer 500, the opening 210 of the case 200 in which the electrode assembly 100 is accommodated may be completely sealed by the cap plate 300, the terminal plate 400, and the thermal fusion layer 500.

The thermal fusion layer 500 is cured by heat, but may be melted at a certain temperature (e.g., a predetermined temperature). Here, the temperature at which the thermal fusion layer 500 melts may be a temperature exceeding a temperature of heat for curing the thermal fusion layer 500, but is not limited thereto.

For example, the thermal fusion layer 500 may include a thermosetting resin and a thermoplastic resin. The thermosetting resin and the thermoplastic resin of the thermal fusion layer 500 may be stacked in a plurality of layers, but are not limited thereto. The thermosetting resin of the thermal fusion layer 500 is cured by heat, and may include any of various known thermosetting resins, such as a phenol resin, a urea resin, a melamine resin, an epoxy resin, and a polyester resin. In an embodiment, the thermoplastic resin of the thermal fusion layer 500 includes a polypropylene resin that melts at a certain temperature (e.g., a predetermined temperature), but is not limited thereto, and may include any of various known thermoplastic resins, such as polystyrene, polyethylene, and polyvinyl chloride resins.

As described above, in the rechargeable battery 1000 according to an embodiment, the cap plate 300 includes the plate body 310 including stainless steel, the plating layer 320 including nickel coated on the front surface 311 of the plate body 310, and the passive state film 330 including a chromium oxide coated on the rear surface 312 of the plate body 310, the passive state film, which is an oxide, is not positioned between the cap plate 300 and the thermal fusion layer 500 by the plating layer 320 including nickel, such that the bonding force between the cap plate 300 and the thermal fusion layer 500 is improved, thereby improving the bonding force between the cap plate 300 and the terminal plate 400, and, at the same time, suppressing a chemical transformation of the rear surface 312 of the cap plate 300 by an electrolyte solution or the like by the passive state film 330 including an oxide.

In the rechargeable battery 1000 according to the embodiment, even if the cap plate 300 including stainless steel and the terminal plate 400 including aluminum are insulation-bonded by the thermal fusion layer 500 including a polypropylene resin, which is a polymer material, since the plating layer 320 including nickel coated on the front surface 311 of the cap plate 300 is directly bonded to the thermal fusion layer 500 which is a polymer material, the passive state film 330, which is a chromium oxide, which is naturally formed on the surface of the stainless steel included in the cap plate 300, is not positioned on the front surface 311 of the cap plate 300 between the cap plate 300 and the thermal fusion layer 500, but is coated only on the rear surface 312 of the cap plate 300, the bonding force between the cap plate 300 and the thermal fusion layer 500, which are different materials, is improved, such that the bonding force between the cap plate 300 and the terminal plate 400 is improved, and, at the same time, a chemical transformation of the rear surface 312 of the cap plate 300 is suppressed.

That is, even when the cap plate 300 and the terminal plate 400 are bonded by the thermal fusion layer 500 that is a polymer material, the bonding force between the cap plate 300 and the terminal plate 400 is improved, and even in a high temperature and high humidity situation, the rechargeable battery 1000 in which the bonding force between the cap plate 300 and the terminal plate 400 is maintained is provided.

While the present invention has been described in connection with what are presently considered to be some practical embodiments, it is to be understood that the invention is not limited to the disclosed embodiments, but, on the contrary, is intended to cover various modifications and equivalent arrangements included within the scope of the appended claims.

It is clear for a person skilled in the art that the disclosed embodiments can also be combined where possible.

## Claims

1. A rechargeable battery (1000) comprising:
an electrode assembly (100) comprising a first electrode (110), a second electrode (120), and a separator (130) between the first electrode (110) and the second electrode (120);
a case (200) that is connected to the first electrode (110) and accommodates the electrode assembly (100), and comprises an opening (210);
a cap plate (300) that is coupled to the case (200) to cover an outer area of the opening (210) and comprises a through-hole (301) exposing a central area of the opening (210);
a terminal plate (400) that is connected to the second electrode (120) and is insulation-bonded to the cap plate (300) so as to cover the through-hole (301); and
a thermal fusion layer (500) that is positioned between the cap plate (300) and the terminal plate (400) and insulation-bonds the cap plate (300) and the terminal plate (400),
wherein the cap plate (300) comprises a plating layer (320) that is directly bonded to the thermal fusion layer (500).

2. The rechargeable battery (1000) of claim 1, wherein
the thermal fusion layer (500) comprises a resin, and
the plating layer (320) comprises nickel.

3. The rechargeable battery (1000) of claim 2, wherein the resin comprises polypropylene.

4. The rechargeable battery (1000) of any one of the preceding claims, wherein the cap plate (300) further comprises:
a plate body (310) comprising stainless steel, the plating layer (320) being coated on a front surface (311) thereof; and
a passive state film (330) coated on a rear surface (312) of the plate body (310).

5. The rechargeable battery (1000) of claim 4, wherein
the front surface (311) of the plate body (310) faces the thermal fusion layer (500), and
the rear surface (312) of the plate body (310) faces an inside of the case (200).

6. The rechargeable battery (1000) of claim 4 or 5, wherein the front surface (311) of the plate body (310) is in direct contact with the plating layer (320).

7. The rechargeable battery (1000) of any one of claims 4 to 6, wherein the passive state film (330) is not positioned between the front surface (311) of the plate body (310) and the plating layer (320).

8. The rechargeable battery (1000) of any one of claims 4 to 7, wherein the passive state film (330) is in contact with an electrolyte solution inside the case (200).

9. The rechargeable battery (1000) of any one of claims 4 to 8, wherein the passive state film (330) comprises a chromium oxide.

10. The rechargeable battery (1000) of any one of the preceding claims, wherein the terminal plate (400) comprises:
a flange portion (410) that covers the through-hole (301) and is directly bonded to the thermal fusion layer (500); and
a protrusion (420) passing through the through-hole (301) from the flange portion (410).

11. The rechargeable battery (1000) of claim 10, wherein
the flange portion (410) is positioned on the plating layer (320) of the cap plate (300), and
the protrusion (420) passes through the through-hole (301) from the flange portion (410) to be connected to the second electrode (120).

12. The rechargeable battery (1000) of claim 10 or 11, wherein the electrode assembly (100) further comprises:
a first electrode tab (140) extending from the first electrode (110) to be welded to the case (200); and
a second electrode tab (150) extending from the second electrode (120) to be welded to the protrusion (420) of the terminal plate (400).

13. The rechargeable battery (1000) of any one of the preceding claims, wherein
the case (200) and the cap plate (300) have a same polarity as the first electrode (110), and
the terminal plate (400) has a same polarity as the second electrode (120).

14. The rechargeable battery (1000) of any one of the preceding claims, wherein the rechargeable battery (1000) is a coin cell or a button cell.

15. The rechargeable battery (1000) of claim 14, wherein a ratio of a height of the rechargeable battery (1000) to a diameter thereof is 1 or less.
